# EUROPÄISCHE PATENTSCHRIFT

(11) **EP 0 562 541 B1**
(45) Veröffentlichungstag und Bekanntmachung des Hinweises auf die Patenterteilung: **02.06.1999**
(21) Anmeldenummer: 93104739.3
(22) Anmeldetag: 23.03.1993
(51) Int. Cl.: A23N 15/08

(54) **Trennvorrichtung zum Abtrennen der Tochterzwiebeln und/oder der Wurzel von Blumenzwiebeln**
Device to separate secondary growths and/or roots from bulbs
Dispositif pour séparer des croissances secondaires et/ou des racines des bulbes

(30) Priorität: 23.03.1992 DE 4209350
(43) Veröffentlichungstag der Anmeldung: 29.09.1993
(73) Patentinhaber: Popma, Frans, D-60437 Frankfurt (DE); Zura, Franz, D-60598 Frankfurt (DE)
(72) Erfinder: Popma, Frans, D-60437 Frankfurt (DE); Zura, Franz, D-60598 Frankfurt (DE)
(74) Vertreter: Boecker, Joachim, Dr.-Ing.

(56) Entgegenhaltungen:
- EP-A- 0 153 244
- DD-A- 279 815
- DE-A- 3 903 130
- FR-A- 2 641 677

## Beschreibung

Die Erfindung betrifft eine Trennvorrichtung gemäß dem Oberbegriff des Anspruchs 1

Bei geernteten Blumenzwiebeln ist es erforderlich, diese vor ihrer Vermarktung von den an ihnen angewachsenen kleinen Tochterzwiebeln und Wurzeln zu befreien. Zu diesem Zweck werden die Blumenzwiebeln in der Regel zunächst prepariert mit dem Ziel, die Verbindungen zwischen der Blumenzwiebel und den Tochterzwiebel beziehungsweise den Wurzeln zu verspröden, damit die Tochterzwiebeln beziehungsweise Wurzeln sich durch Brechen, Abscheren, Verdrehen oder Reißen leichter von den Blumenzwiebeln entfernen lassen. Dieses Präparieren erfolgt meistens maschinell unter Einsatz von Luft und Wärme. Die Wurzeln können bestehen aus Wurzelfäden, Wurzelstielen und Wurzelballen, wobei es sich bei den letztgenannten um die eingetrocknete alte gepflanzte Zwiebel handelt.

Es ist bekannt, die Blumenzwiebeln nach dem eventuellen Präparieren wie folgt zu behandeln: Die Zwiebeln werden auf einer Rüttelförderbahn in einer im wesentlichen horizontalen Richtung transportiert, wobei längs eines begrenzten Abschnittes der Förderbahn über dieser ein endlos umlaufendes Band derart angeordnet ist, daß sich zwischen dem Förderband und der Rüttelförderbahn ein Spalt bildet, durch den die Blumenzwiebeln hindurch gefördert werden. Das Förderband hat an der den Zwiebeln zugewandten Seite eine ebene Oberfläche und besteht aus nachgiebigem Gummi oder Kunststoff. Der Abstand des Förderbandes von der Rüttelförderbahn ist so eingestellt, daß die Blumenzwiebeln auch von dem oberen Förderband erfaßt werden. Die Laufrichtung des oberen Förderbandes ist so gewählt, daß es die Blumenzwiebeln in der gleichen Richtung wie die Rüttelförderbahn fördert. Durch die leicht walkende Bewegung der Blumenzwiebel in dem Spalt zwischen den beiden Förderflächen werden ein gewisser Teil der Tochterzwiebeln und auch einige Wurzeln von den Mutterzwiebeln getrennt. Die Effektivität dieser Trennvorrichtung ist jedoch gering, so daß die Zwiebeln nach dem Durchlaufen der Trennvorrichtung unter großem Einsatz von menschlicher Arbeitskraft von den bei der maschinellen Bearbeitung nicht abgetrennten Tochterzwiebeln und Wurzeln befreit werden müssen. Diese intensive Hand-Nachbearbeitung verteuert den Aufbereitungsprozeß der Zwiebeln erheblich.

Bei der aus der DE-OS 39 03 130 bekannten Trennvorrichtung wird der Spalt, durch den die Blumenzwiebel hindurchlaufen, von zwei in gleicher Richtung laufenden Fingerförderbändern gebildet. Durch die Einwirkung von Fingern von beiden Seiten auf die Blumenzwiebel werden diese leicht beschädigt. Das Erfordernis zweier Fingerförderbänder führt auch zu einer relativ aufwendigen Trennvorrichtung. Im Anfangsbereich des unteren Förderbandes ist bei dieser bekannten Vorrichtung das obere Förderband noch nicht vorhanden. In diesem Bereich sind eine oder mehrere Reinigungsbürsten über dem unteren Förderband angeordnet. Diese Bürsten dienen nicht der Förderung, sondern der Reinigung. Sie drehen sich relativ schnell im Verhältnis zum langsam laufenden unteren Förderband. Dadurch entsteht eine hohe Relativbewegung zwischen Reinigungsbürsten und dem geförderten Gut, wodurch die Reinigung zustande kommt.

Aus der DD-A-37 470 ist eine Reinigungsanlage für Hackfrüchte, insbesondere Kartoffeln, bekannt, bei der nur eine untere Förderbahn vorhanden ist. Diese besteht aus nebeneinander angeordneten rotierenden Walzenbürsten. Über dieser Förderbahn sind stationäre Bürstensegmente angeordnet, die in der Höhe verstellbar sind, wodurch der Förderspalt variiert werden kann. Die in Förderrichtung zwischen zwei Walzenbürsten liegenden Bürstensegmente ragen tiefer in den Förderspalt hinein, als die Bürstensegmente, die genau über einer Walzenbürste liegen. Hierdurch soll eine Vergleichmäßigung des Förderspaltes erreicht werden.

Der Erfindung liegt die Aufgabe zugrunde, eine Trennvorrichtung der eingangs genannten Art zu entwickeln, welche ein effektives maschinelles Abtrennen der Tochterzwiebeln und/oder Wurzeln bei einer gleichzeitig sehr schonenden Behandlung der empfindlichen Zwiebeln ermöglichst.

Zur Lösung dieser Aufgabe wird eine Trennvorrichtung der oben genannten Art vorgeschlagen, welche die im Anspruch 1 beziehungsweise Anspruch 2 genannten Merkmale hat.

Vorteilhafte Ausgestaltungen und Weiterentwicklungen der Trennvorrichtungen nach der Erfindung sind in den Unteransprüchen genannt.

Bei der Trennvorrichtung gemäß der Erfindung besteht die obere Förderbahn aus einer Fingerförderbahn, deren Finger die Blumenzwiebel erfassen. Diese Fingerförderbahn kann von einem endlosen Fingerförderband oder einer Anzahl in einer Ebene nebeneinander angeordneter rotierbarer Fingerwalzen gebildet werden. Die Finger bestehen aus einem weichen, nachgiebigen Material, zum Beispiel Gummi oder Kunststoff.

Durch entsprechende Bemessung der Stärke der Finger und ihres Abstandes von der gegenüberliegenden Förderbahn kann die Trennvorrichtung so ausgestaltet werden, daß sie sich entweder bevorzugt zur Abtrennung von Tochterzwiebeln oder bevorzugt zur Abtrennung von Wurzeln eignet.

Wenn das Abtrennung von Tochterzwiebeln im Vordergrung steht, werden die Finger durch Wahl ihrer Länge, Dicke und/oder Materialart so bemessen, daß sie beim Auftreffen auf eine an der Mutterzwiebel angewachsene Tochterzwiebel nicht nennenswert wegknicken oder ausweichen, sondern steif genug sind, die Tochterzwiebel von der Mutterzwiebel wegzubrechen oder abzuscheren. Anderseits dürfen die Finger nicht so steif sein, daß sie die Mutterzwiebeln beschädigen. Das höhenverstellbare Fingerförderband wird in diesem Falle vorzugsweise so eingestellt, daß der von den freien Enden der Finger begrenzte Förderspalt zwischen den beiden Förderbahnen so groß ist, das die Finger etwa bis an die Mutterzwiebeln heranreichen, nachdem diese von den Tochterzwiebeln befreit worden sind. Hierdurch wird verhindert, daß die relativ steifen Finger die Mutterzwiebeln beschädigen.

Wenn das Abtrennen von Wurzeln im Vordergrund steht, werden die Finger so bemessen, daß sie beim Auftreffen auf Blumenzwiebeln durch Abbiegen oder Wegknicken dem Widerstand ausweichen und an den Zwiebeln vorbeigleiten können. Die Finger sind in diesem Falle in der Regel bedeutend schwächer und auch kürzer ausgebildet als für das Abtrennen von Tochterzwiebeln. Die größere Nachgiebigkeit kann natürlich auch ganz oder teilweise durch entsprechende Materialwahl erreicht werden. Der von den freien Enden der Finger begrenzte Förderspalt ist in diesem Falle so bemessen, daß die Finger in die die Blumenzwiebeln nach ihrer Trennung von den Tochterzwiebeln umhüllende gedachte planparalle Raumscheibe eindringen. Die Eindringtiefe beträgt dabei vorzugsweise etwa ein bis zwei Drittel der Dicke der genannten Raumscheibe. Die freien Enden der Finger liegen beim Abtrennen der Wurzeln also bedeutend dichter an der gegenüberliegenden Förderfläche als beim Abtrennen der Tochterzwiebeln. Dank der geringeren Steifigkeit dieser Finger kommt es dabei dennoch nicht zu einer Beschädigung der Blumenzwiebeln; jedoch können sich die Wurzel leichter in den tief zwischen die Zwiebeln hineinragenden und in der Regel dünneren Fingern verfangen, wodurch es zu einem Abtrennen der Wurzel von den Blumenzwiebeln, beispielsweise durch Abreißen, Wegbrechen oder Abdrehen, kommt. Die Wurzel sind infolge der in der Regel vorausgegangenen Präparierung der Blumenzwiebeln relativ spröde, so daß sie leicht abtrennbar sind.

Das Raster, in welchem die Finger an der Fingerförderbahn angeordnet sind, ist im wesentlichen für die Fingerförderbahnen zum Abtrennen von Tochterzwiebeln und Wurzeln gleich. Vorzugsweise wird das Raster bei der Trennvorrichtung für die Wurzeln jedoch etwas weiter gewählt. Vorzugsweise sind benachbarte Reihen von Fingern auf den Fingerförderbändern bzw. Fingerförderwalzen gegeneinander versetzt angeordnet.

Die Bemessung der Finger und die Höheneinstellung der Fingerförderbahn hängen natürlich auch von der Empfindlichkeit und Gestalt der zu bearbeitetenden Zwiebelsorte ab. Die optimalen Werte müssen empirisch ermittelt werden. Dies ist für die Höheneinstellung leicht möglich durch Beobachtung des Zustandes, in welchem die Zwiebeln die Trennvorrichtung für Tochterzwiebeln oder Wurzeln verlassen. Diese Beobachtung kann auch elektronisch, zum Beispiel mittels Fotozellen, erfolgen, um die Höhenverstellung zu automatisieren.

Die untere Förderbahn kann, wie im eingangs genannten Stand der Technik, aus einer Rüttelförderbahn oder aus einem umlaufenden endlosen Förderband mit ebener Förderfläche bestehen. Als Material für die Förderfläche wird hierbei ebenfalls vorzugsweise nachgiebiger Gummi oder Kunststoff verwendet, so daß auch die die Blumenzwiebeln tragende Fläche eine gewisse elastische Nachgiebigkeit aufweist. Bei Verwendung einer Rüttelförderbahn wird auf dieser eine Matte mit ebener Oberfläche aus ähnlich nachgiebigem Material aufgelegt, die, abgesehen von der Rüttelbewegung, stationär angeordnet ist.

Als besonders wirksam hat sich eine Trennvorrichtung gemäß der Erfindung erwiesen, bei der die Blumenzwiebel durch zwei in Reihe geschaltete Teil-Trennvorrichtungen der vorgenannten Art laufen, wobei die Finger der ersten Teil-Trennvorrichtung so ausgebildet und angeordnet sind, daß sie in erster Linie der Abtrennung der Tochterzwiebeln dienen, während die Finger der zweiten Teil-Trennvorrichtung so ausgebildet und angeordnet sind, daß sie in erster Linie der Abtrennung der Wurzel dienen.

Anhand der in den Figuren 1-6 und 8-9a gezeigten Ausführungsbeispiele soll die Erfindung näher erläutert werden. Es zeigen
- Figur 1: ein Ausführungsbeispiel einer Trennvorrichtung gemäß der Erfindung mit zwei Teil-Trennvorrichtungen,
- Figur 2: verschiedene Beispiele für die Gestalt und Beschaffenheit vom Blumenzwiebeln vor ihrer Behandlung in einer Trennvorrichtung gemäß der Erfindung,
- Figur 3: in größerem Maßstab einen Ausschnitt aus der Trennvorrichtung gemäß Figur 1 mit einem Fingerförderband zur Abtrennung von Tochterzwiebel,
- Figur 4: eine Draufsicht auf das Fingerförderband gemäß Figur 3,
- Figur 5: in größerem Maßstab einen Ausschnitt aus der Trennvorrichtung gemäß Figur 1 mit einem Fingerförderband zur Abtrennung von Wurzeln,
- Figur 6: eine Draufsicht auf das Fingerförderband gemäß Figur 5.
- Figur 7: eine Fingerförderbahn, die aus mehreren Fingerförderwalzen aufgebaut ist,
- Figur 8: einen Ausschnitt aus einem Ausführungsbeispiel einer Trennvorrichtung gemäß der Erfindung, bei der beide sich gegenüberliegenden Förderflächen der Trennvorrichtung aus Fingerförderwalzen aufgebaut sind,
- Figur 8a: das Ausführungsbeispiel nach Figur 8, wobei die sich gegenüberliegenden beiden Förderbahnen wesentlich dichter aneinander gerückt sind,
- Figur 9: einen Ausschnitt aus einer Trennvorrichtung entsprechend Figur 8, wobei die Förderrichtung senkrecht verläuft,
- Figur 9a: einen entsprechenden Ausschnitt wie Figur 9a, ohne Versetzung der Fingerförderwalzen beider Förderbahnen gegeneinander.

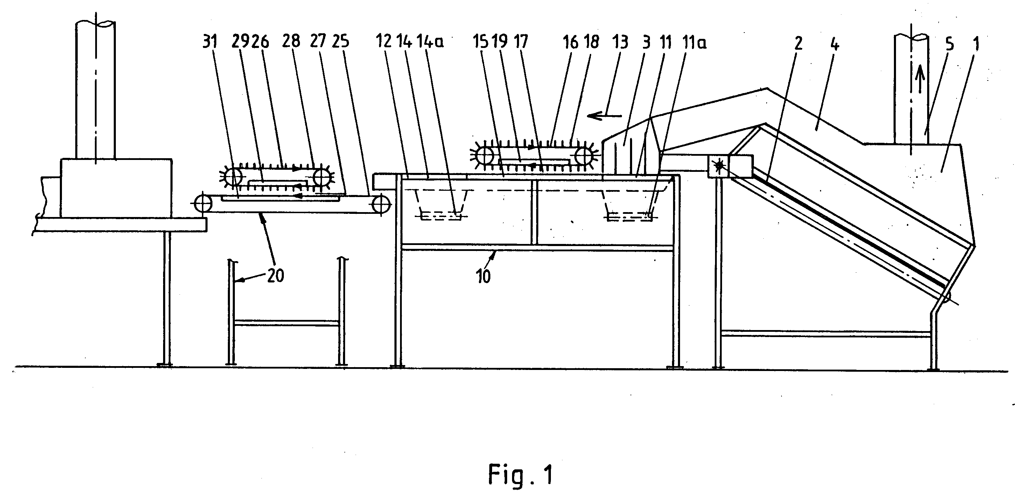

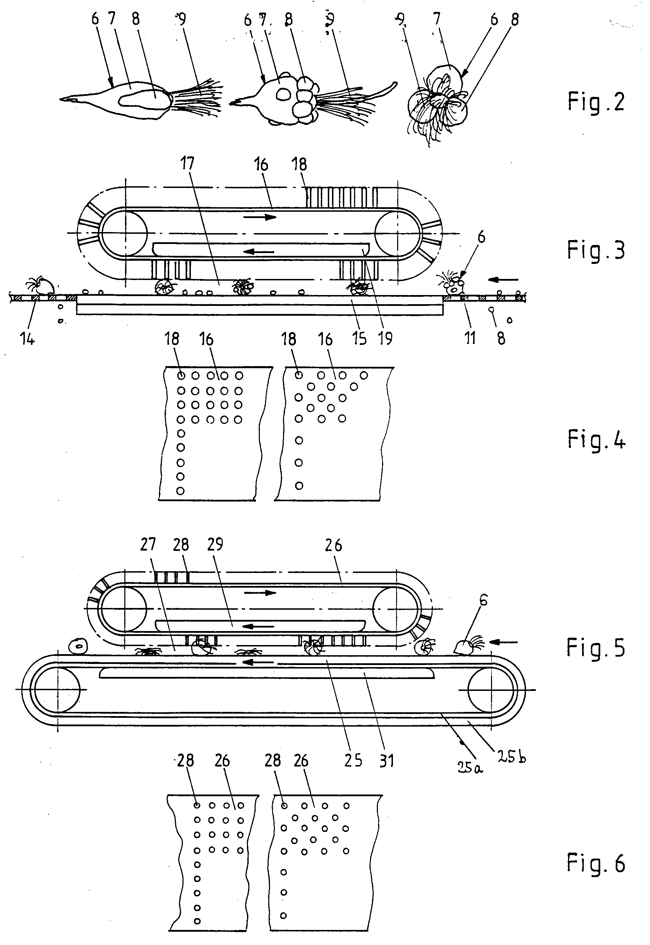

In Figur 1 ist mit 1 eine Einschütt- und Fördereinrichtung bezeichnet, in die an dem im Sinne der Zeichnung rechten Ende die unbehandelten Blumenzwiebeln in einer bequemen Höhe eingeschüttet werden und dann von einem Förderband 2 nach oben an das Eintrittsende der Rüttelförderbahn-Einrichtung 10 gefördert werden. Figur 2 zeigt drei Beispiele für zu verarbeitende Blumenzwiebeln 6. An der Mutterzwiebel 7 sind seitlich und im Bereich der Wurzel 9 Tochterzwiebeln 8 angewachsen.

Die Zwiebeln werden zunächst über einem Eintrittssieb 11 von begleitenden kleineren Partikeln und bereits getrennten kleinen Tochterzwiebeln befreit, die von einer durch ein Förderband 11a angedeuteten zur Seite fördernden Fördereinrichtung fortgetragen werden. Anstelle der Fördereinrichtung 11a kann auch einfach eine auffangende Kiste vorgesehen sein. Gleichzeitig beginnt die Förderung auf der Rüttelförderbahn 12 in Richtung des Pfeils 13. Der über den Zwiebeln vorhandene Raum im Eintrittsbereich ist mit Verschalungen 3, 4 abgedeckt, und der so abgegrenzte Raum ist an eine Staubabsaugung angeschlossen, die durch das Absaugrohr 5 angedeutet ist. Am Ende der Rüttelförderbahn ist ein zweites Sieb 14 vorhanden, durch welches die von den Mutterzwiebeln getrennten kleinen Tochterzwiebeln 8 hindurchfallen und von einem Förderband 14a zur Seite fortgetragen werden. Es sei zum besseren Verständnis erwähnt, daß einzelne Tochterzwiebeln so groß sein können, daß sie nach ihrer Abtrennung zusammen mit den Mutterzwiebeln weiterverarbeitet werden.

Zwischen den beiden Sieben 11, 14 befindet sich auf der Rüttelfördereinrichtung 10 eine aus nachgiebigem Gummi oder Kunststoff bestehende Auflage 15 mit ebener Oberfläche. Siehe auch die vergrößerte Darstellung der eigentlichen Trennvorrichtung für die Tochterzwiebeln in Figur 3. Oberhalb dieser Auflage ist ein endloses umlaufendes Fingerförderband 16 angeordnet. Zwischen der von den freien Enden der Finger 18 gebildeten unteren Begrenzungsebene des Fingerförderbandes 16 und der Oberseite der Auflage 15 bildet sich ein Spaltraum 17, durch welchen die Zwiebeln hindurchgefördert werden. Für den unten laufenden Teil des Fingerförderbandes 16 ist vorzugsweise eine stützende starre Stützfläche 19 vorgesehen.

Das Fingerförderband der in Figur 3 genauer gezeigten ersten Teil-Trennvorrichtung der in Figur 1 gezeigten doppelstufigen Trennvorrichtung ist so bemessen und in seinem Abstand von der unteren Förderfläche so eingestellt, daß in dieser Trennvorrichtung in erster Linie die Tochterzwiebeln von den Mutterzwiebeln getrennnt werden. Die Finger sind also entsprechend den obigen Ausführungen relativ steif ausgebildet, so daß sie beim Auftreffen auf eine Tochterzwiebel nicht wegknicken, sondern diese von der Mutterzwiebel wegbrechen oder abscheren. Damit die Mutterzwiebeln von den relativ steifen Fingern nicht beschädigt werden, ist die Breite des Förderspaltes 17 etwa so gemessen, daß die Blumenzwiebel, nachdem die Tochterzwiebeln wegggebrochen worden sind, ungefähr gerade in den Förderspalt passen und nur leicht von den Fingern berührt werden.

Figur 4 zeigt eine Draufsicht auf die Finger 18 des Förderbandes 16. Im linken Teil der Figur 4 wird ein Beispiel für die Anordnung der Finger gezeigt, bei denen die Fingerreihen nicht gegeneinander versetzt sind. Im rechten Teil der Figur 4 ist eine solche Versetzung vorgesehen.

Die Teil-Trennvorrichtung für die Wurzeln ist in Figur 1 mit 20 bezeichnet und in Figur 5 mit ihrem wichtigsten Teil in größerem Maßstab dargestellt. Bei dieser Teil-Trennvorrichtung besteht die unterer Förderbahn aus einem umlaufenden endlosen Förderband 25 mit ebener Förderfläche. Auch dieses Band besteht vorzugsweise aus einem nachgiebigen Material, wie Gummi oder Kunststoff. Das untere Förderband 25 wird dabei vorzugsweise über eine von unten stützende starre Stützfläche 31 bewegt.

Über dem Förderband 25 ist auch hier ein umlaufendes endloses Fingerförderband 26 angeordnet, das mit dem unteren Förderband einen Förderspalt 27 bildet, durch welchen die von der ersten Teil-Trennvorrichtung kommenden Blumenzwiebeln geschleust werden. Für den unten laufenden Teil des Fingerförderbandes ist eine der Stützfläche 31 entsprechende starre Stützfläche 29 vorgesehen.

Die Finger 28 des Fingerförderbandes 26 sind entsprechend den obigen Ausführungen wesentlich dünner und kürzer ausgebildet als bei dem Fingerförderband 16 der ersten Teil-Trennvorrichtung. Ebenfalls entsprechend den obigen Ausführungen sind die Finger 28 des Fingerförderbandes 26 dichter an die gegenüberliegende Förderbahn 25 herangerückt, so daß der Spalt 27 entsprechend schmaler ist.

Figur 6 zeigt in gleicher Darstellung wie Figur 4 die Ausbildung der Finger in der Trennvorrichtung für die Wurzeln. Man erkennt, daß die Finger hier bedeutend feiner ausgebildet sind als in Figur 4, während das Raster etwa das gleiche ist. Durch die Versetzung der Fingerreihen wird das Umwälzen der Blumenzwiebeln und das gewünschte Sich-Verfangen der Wurzeln zwischen den Finger gefördert.

Als ein lediglich der Gewinnnung einer Größenvorstellung dienendes Beispiel können für die Ausbildung der Finger folgende Beispielswerte genannt werden: Beim Förderband zum Abtrennen von Tochterzwiebeln beträgt der Durchmesser der Finger 7 mm, die Länge 33 mm und der Abstand zwischen benachbarten Fingern 10 mm. Beim Förderband zum Abtrennen von Wurzeln beträgt der Durchmesser der Finger 4 mm, die Länge 20 mm und der Abstand zwischen benachbarten Fingern 12 mm.

Das mit glatter Fläche versehene Förderband 25 kann aus einer relativ dünnen tragenden Schicht 25a und aus einer darauf angebrachten relativ dicken Schicht 25b aus elastisch nachgiebigem Material, wie beispielsweise Moosgummi, bestehen. Die Dicke dieser Schicht kann beispielsweise 10 bis 20 mm betragen. Es ist auch denkbar, daß das gesamte Band 25 aus einem homogenen elastisch nachgiebigen Material besteht. Natürlich kann auch die untere Förderbahn 10 der ersten Teil-Trennvorrichtung statt aus einer Rüttelfördereinrichtung aus einem endlosen, umlaufenden Förderband bestehen. Für die Siebeinrichtungen 11 und 14 wird auch dann zum Weiterfördern eine Rütteleinrichtung verwendet. Das Eingangssieb ist dann etwas höher und das Ausgangssieb etwas tiefer als das Förderband angeordnet.

Es ist auch denkbar, daß die die Blumenzwiebel tragende Fläche 15 in Figur 3 aus einem umlaufenden Förderband besteht, das auf der Rüttelfördereinrichtung angeordnet ist. Das Förderband wird dann zugleich gerüttelt. Umgekehrt kann natürlich auch bei der zweiten Teil-Trennvorrichtung das untere Förderband durch eine Rüttelförderbahn ersetzt werden.

In Figur 1 sind die beiden Teil-Trennvorrichtungen 10, 20 mit getrennten Gestellen und getrennten unteren Förderbahnen ausgeführt. Es versteht sich, daß für beide Trennvorrichtungen auch eine gemeinsame untere Förderbahn verwendet werden kann, bei der dann die beiden oberen Fingerförderbänder hintereinander angeordnet sind. Selbstverständlich können umgekehrt beide Teiltrennvorrichtungen auch völlig unabhängig voneinander errichtet und verwendet werden.

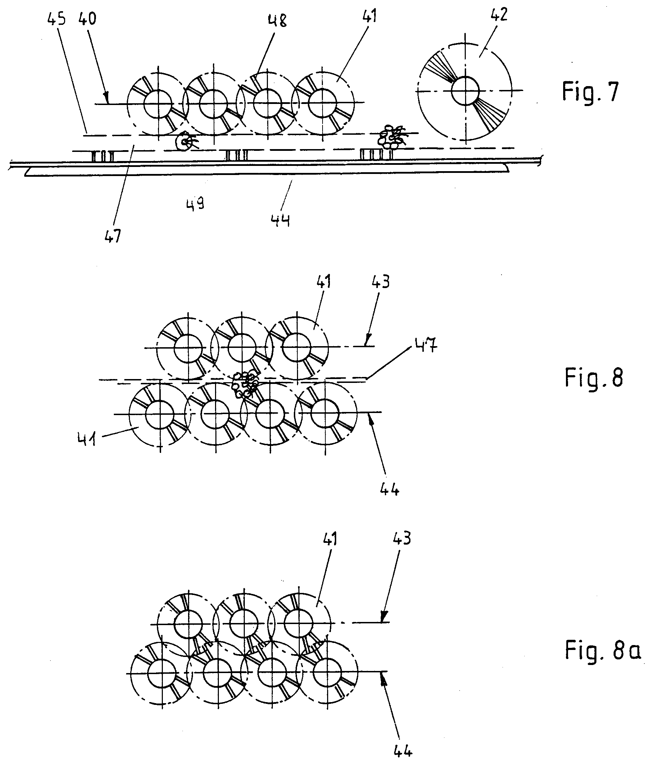

Figur 7 zeigt eine Trennvorrichtung ungemäß der Erfindung, bei der beide zusammenarbeitenden Förderbahnen als Fingerförderbahnen ausgebildet sind. Die obere Förderbahn 40 besteht dabei aus einer Reihe nebeneinander angeordneter Fingerförderwalzen 41. Die Finger benachbarter Walzen kämmen ineinander, was durch entsprechende Versetzung der Fingerreihen benachbarter Fingerförderwalzen erleichtert wird. Das untere Förderband 44 besteht aus einem endlosen umlaufenden Fingerförderband. Der Förderspalt 47 wird hierbei nach oben von der gestrichelt angedeuteten unteren Tangente 45 an die freien Enden der Finger 48 der Walzen 41 begrenzt und nach unten durch die freien Enden der Finger 49 des Fingerförderbandes 44.

In Figur 7 ist außerdem eine der Trennvorrichtung vorgeschaltete Reinigungsbürste 42 gezeigt. Solche Bürsten können, auch in Gruppen zu zwei oder mehreren, auch bei den oben beschriebenen Trennvorrichtungen zusätzlich vorgesehen sein.

Figur 8 zeigt ein Ausführungsbeispiel gemäß der Erfindung ähnlich der Trennvorrichtung in Figur 7, wobei jedoch auch die untere Förderbahn 44 aus einer Reihe nebeneinander angeordneter Fingerförderwalzen 41 ausgebildet ist.

Für die Bemessung des Förderspaltes 47 in den Figuren 7 und 8 gelten im wesentlichen die gleichen Grundsätze wie oben erläutert.

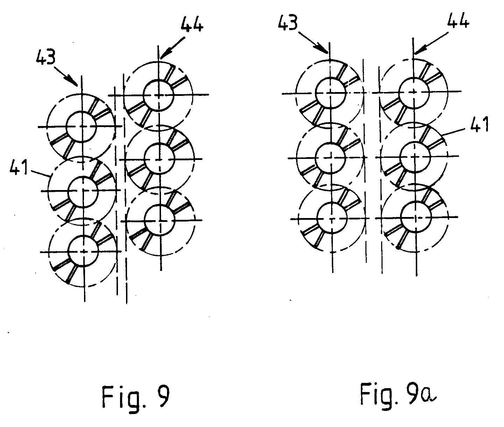

Die Figur 9 und 9a zeigen, wie eine Trennvorrichtung gemäß Figur 8 auch mit einer senkrecht im Raum verlaufenden Förderbahn angeordnet werden kann. Die Fingerförderwalzen der beiden Förderbahnen 43, 44 können hierbei gegeneinander versetzt (Figur 9) oder nicht gegeneinander versetzt (Figur 9a) sein.

Auch die anderen beschriebenen Ausführungsformen von Trennvorrichtungen nach der Erfindung können derart im Raum angeordnet werden, daß die Förderrichtung schräg oder senkrecht verläuft. Bei senkrechter oder so stark geneigter Anordnung, daß die Blumenzwiebel ohne gegenüberliegende Förderbahn von der tragenden Förderbahn herunterfallen würden, müssen beide Förderbahnen gleich lang sein.

Die Anordnung der beiden zusammenwirkenden Förderbahnen bei der Trennvorrichtung gemäß der Erfindung ist normalerweise so getroffen, daß der Spalt in Förderrichtung konstant ist. Es kann jedoch auch zweckmäßig sein, den Förderspalt so auszubilden, daß er in Förderrichtung leicht konvergiert. Dies ist insbesondere dann zweckmäßig, wenn die Blumenzwiebel mit den Tochterzwiebeln bedeutend größer sind als nach Abtrennung der Tochterzwiebeln.

Bei gewissen Sorten von Blumenzwiebeln, zum Beispiel Narzissen, kann es vorkommen, daß die geernteten Zwiebeln sich mit ihren Wurzeln miteinander so stark verflochten haben, daß es eines besonderen Arbeitsganges bedarf, sie wieder voneinander zu trennen. Auch dies mußte bisher von Hand gemacht werden. Gemäß der Erfindung kann die Trennvorrichtung nach der Erfindung auch hierfür verwendet werden. In diesem Falle wird bei Verwendung von Fingerförderbahnen auf beiden Seiten der Förderspalt wesentlich kleiner oder sogar negativ (überlappende Finger) eingestellt. Letzteres ist in Figur 8a angedeutet. Wenn die voneinander zu trennenden Blumenzwiebel relativ robust sind und die Finger nicht zu hart und steif ausgebildet sind, dann können sie durch eine in der gezeigten Weise eingestellte Trennvorrichtung transportiert werden, wobei sie ohne Beschädigung voneinander getrennt werden. Es ist auch möglich, auf diese Weise an robusten Zwiebeln noch vorhandene Stiele abzutrennen.

Normalerweise fördern die beiden Förderbahnen in gleicher Richtung und laufen mit gleicher Geschwindigkeit oder mit einer nur geringen Differenzgeschwindigkeit, wobei dann vorzugsweise die obere Fingerförderbahn etwas langsamer läuft, zum Beispiel um etwa 1 bis 10 %. Hierdurch wird die Walkbewegung, das heißt die Eigendrehung der Blumenzwiebel, vergrößert. Zur Erzielung sehr starker Walkbewegungen ist es sogar denkbar, daß die obere Förderbahn entgegen der Förderrichtung läuft, dann jedoch mit einer bedeutend geringeren Geschwindigkeit als die die Blumenzwiebeln tragende untere Förderbahn. Bei Verwendung von Förderbahnen aus rotierenden Fingerförderwalzen kann eine unterschiedliche Geschwindigkeit auch zwischen benachbarten Walzen derselben Förderbahn vorgesehen werden.

## Patentansprüche

1. Trennvorrichtung zum Abtrennen der Tochterzwiebeln und/oder der Wurzeln von Blumenzwiebeln, beispielsweise Fresien-Zwiebeln, mit einer Fördereinrichtung mit einer vorzugsweise horizontal angeordneten unteren Förderbahn (15,25) und einer über der unteren Förderbahn angeordneten oberen Förderbahn (16,26), welche sich mindestens längs eines Teils der unteren Förderbahn erstreckt und zusammen mit der unteren Förderbahn einen im wesentlichen planparallelen oder in Fördererichtung leicht konvergierenden Spaltraum (17,27) bildet, durch den die Zwiebeln (6) hindurchgefördert werden, wobei der Abstand zwischen der unteren und der oberen Förderbahn so bemessen ist, daß die Zwiebeln von der oberen Förderbahn erfaßt werden, dadurch gekennzeichnet, daß die obere Förderbahn (16,26) mit aus elastischem Material bestehenden Fingern (18,28) besetzt ist, die fördernd auf die Zwiebeln (6) einwirken, und die untere Förderbahn (15,25) eine ebene Förderfläche hat.

2. Trennvorrichtung zum Abtrennen der Tochterzwiebeln und/oder der Wurzeln von Blumenzwiebeln, beispielsweise Fresien-Zwiebeln, mit einer Fördereinrichtung mit einer vorzugsweise horizontal angeordneten unteren Förderbahn (15,25) und einer über der unteren Förderbahn angeordneten oberen Förderbahn (16,26), welche sich mindestens längs eines Teils der unteren Förderbahn erstreckt und zusammen mit der unteren Förderbahn einen im wesentlichen planparallelen oder in Fördererichtung leicht konvergierenden Spaltraum (17,27) bildet, durch den die Zwiebeln (6) hindurchgefördert werden, wobei der Abstand zwischen der unteren und der oberen Förderbahn so bemessen ist, daß die Zwiebeln von der oberen Förderbahn erfaßt werden, dadurch gekennzeichnet, daß die untere Förderbahn aus einer Anzahl von in einer Ebene nebeneinander angeordneten rotierbaren, mit aus elastischem Material bestehenden Fingern, die fördernd auf die Zwiebel einwirken, besetzten Förderwalzen (41) gebildet wird, deren Drehachsen parallel zur oberen Förderbahn verlaufen, während die obere Förderbahn aus einem umlaufenden endlosen Förderband besetzt mit aus elastischem Material bestehenden Fingern, die fördernd auf die Zwiebel einwirken, oder ebenfalls aus einer Anzahl von in einer Ebene nebeneinander angeordneten rotierbaren, mit aus elastischem Material bestehenden Fingern, die fördernd auf die Zwiebel einwirken, besetzten Förderwalzen (41) besteht.

3. Trennvorrichtung nach Anspruch 1, **dadurch gekennzeichnet**, daß die mit ebener Förderfläche versehene untere Förderbahn (15,25) von einem umlaufenden endlosen Förderband (25) gebildet wird.

4. Trennvorrichtung nach Anspruch 1, **dadurch gekennzeichnet**, daß die untere Förderbahn (15, 25) von einer Rüttelfördereinrichtung (10) gebildet wird.

5. Trennvorrichtung nach Anspruch 3, **dadurch gekennzeichnet**, daß das untere Förderband (25) auf einer Rüttelfördereinrichtung (10) angeordnet ist.

6. Trennvorrichtung nach Anspruch 1 oder 3 bis 5 , **dadurch gekennzeichnet**, daß die mit Fingern (18,28) besetzte obere Förderbahn von einer Anzahl von in einer Ebene nebeneinander angeordneten rotierbaren Fingerförderwalzen (41) gebildet wird, deren Drehachsen parallel zur unteren Förderbahn (15,25) verlaufen.

7. Trennvorrichtung nach einem der Ansprüche 1 oder 3 bis 6 zum bevorzugten Einsatz zur Trennung von Tochterzwiebeln von Mutterzwiebeln, **dadurch gekennzeichnet**, daß die Stärke, Steifigkeit, der Finger (18) der Fingerförderbahn durch Wahl ihrer Länge, Dicke und/oder ihres Material so bemessen ist, daß die Finger beim Auftreffen auf eine an der Mutterzwiebel (7) angewachsene Tochterzwiebel (8) nicht nennenswert wegknicken, sondern die Tochterzwiebel von der Mutterzwiebel abtrennen, und daß der von den freien Enden der Finger begrenzte Förderspalt (17) so bemessen ist, daß die Finger etwa bis an die Mutterzwiebeln heranreichen, nachdem diese von den Tochterzwiebeln befreit sind.

8. Trennvorrichtung nach einem der Ansprüche 1 oder 3 bis 6 zum bevorzugten Einsatz zur Trennung der Wurzel von Blumenzwiebeln, **dadurch gekennzeichnet**, daß die Stärke, Steifigkeit, der Finger (28) der Fingerförderbahn durch Wahl ihrer Länge, Dicke und/oder ihres Materials so bemessen ist, daß sie beim Auftreffen auf Blumenzwiebeln durch Abbiegen und Wegknicken dem Widerstand weitgehend ausweichen, und daß der von den freien Enden der Finger begrenzte Förderspalt (27) so bemessen ist, daß die Finger in die die Blumenzwiebeln nach ihrer Trennung von den Tochterzwiebeln umhüllende planparalle Raumscheibe eindringen, vorzugsweise bis zu einer Tiefe von etwa einem bis zwei Drittel der Dicke der genannten Raumscheibe.

9. Trennvorrichtung nach einem der Ansprüche 7 und 8, **dadurch gekennzeichnet**, daß die Trennvorrichtung aus zwei in Reihe geschalteten Teil-Trennvorrichtungen (10,20) besteht, von denen die erste für die bevorzugte Abtrennung von Tochterzwiebeln bemessen ist und die zweite für die bevorzugte Abtrennung von Wurzeln.

10. Trennvorrichtung nach Anspruch 9, **dadurch gekennzeichnet**, daß die Fingerförderbahnen der ersten und zweiten Teil-Trennvorrichtung in Förderrichtung hintereinander über ein und derselben kooperierenden Förderbahn (15,25) angeordnet sind.

11. Trennvorrichtung nach einem der vorhergehenden Ansprüche, **dadurch gekennzeichnet**, daß in Förderrichtung vor und/oder hinter der oberen Fingerförderbahn über der unteren Förderbahn eine rotierbare die Blumenzwiebeln erfassende Reinigungsbürste (42) angeordnet ist.

12. Trennvorrichtung nach einem der vorhergehenden Ansprüche, **dadurch gekennzeichnet**, daß die Vorrichtung deart im Raum angeordnet ist, daß die Förderrichtung geneigt oder senkrecht verläuft.

13. Verwendung einer Trennvorrichtung nach Anspruch 2, **dadurch gekennzeichnet**, daß bei Verwendung von Förderflächen mit Fingern an beiden einander gegenüberliegenden Förderbahnen die Finger der einen Förderbahn in den Fingern der anderen Förderbahn kämmen, negativer Förderspalt.

## Claims

1. Separation device to separate secondary growths (daughter bulbs) and/or roots from flower bulbs, for example freesia bulbs, comprising a conveyor device with a preferably horizontally arranged lower conveyor track (15,25) and an upper conveyor track (16,26) which is arranged above the lower conveyor track, extends at least along part of the lower conveyor track and forms in cooperation with the lower conveyor track a gap space (17,27) which is plane-parallel or slightly convergent in the transport direction and through which the bulbs are transported, the distance between the lower and the upper conveyor track being dimensioned such that the bulbs are contacted by the upper conveyor track, **characterized** in that the upper conveyor track (16,26) is provided with fingers (18,28) of elastic material, which impart a transporting effect on the bulbs (6), and that the lower conveyor track (15,25) has a plane transport area.

2. Separation device to separate secondary growths (daughter bulbs) and/or roots from flower bulbs, for example freesia bulbs, comprising a conveyor device with a preferably horizontally arranged lower conveyor track (15,25) and an upper conveyor track (16,26), which is arranged above the lower conveyor track, extends at least along part of the lower conveyor track and forms in cooperation with the lower conveyor track a gap space (17,27), which is plane-parallel or slightly convergent in the transport direction and through which the bulbs are transported, the distance between the lower and the upper conveyor track being dimensioned such that the bulbs are contacted by the upper conveyor track, **characterized** in that the lower conveyor track is formed by a number of rotatable conveyor rolls (41) arranged side by side in one plane with their axes of rotation extending parallel to the upper conveyor track, which conveyor rolls are provided with fingers of elastic material, which impart a transporting effect on the bulbs, the upper conveyor track consisting of a circulating endless conveyor belt provided with fingers of elastic material which impart a transporting effect on the bulbs, or consisting also of a number of conveyor rolls (41) arranged side by side in one plane provided with fingers of elastic material which impart a transporting effect on the bulbs.

3. Separation device according to claim 1, **characterized** in that the lower conveyor track (15,25), which is provided with a plane transport area, is formed by a circulating endless conveyor belt (25).

4. Separation device according to claim 1, **characterized** in that the lower conveyor track (15,25) is formed by a vibrating conveyor device (10).

5. Separation device according to claim 3, **characterized** in that the lower conveyor track (25) is arranged on a vibrating conveyor device (10).

6. Separation device according to any of claims 1 or 3 to 5, **characterized** in that the upper conveyor track, which is provided with fingers (18,28), is formed by a number of rotating finger-equipped conveyor rolls arranged side by side in one plane with their axes of rotation extending parallel to the lower conveyor track (15,25).

7. Separation device according to any of claims 1 or 3 to 6 intended preferably for the separation of secondary growths (daughter bulbs) from their mother bulbs, **characterized** in that the strength, stiffness, of the fingers (18) of the finger-equipped conveyor track, by selection of their length, thickness and/or material, is dimensions such that the fingers, when hitting a daughter bulb (8) connected to the mother bulb (7) do not buckle mentionably, but separate the daughter bulb from the mother bulb, and that the transport gap (17), which is limited by the free (outer) ends of the fingers, is dimensioned such that the fingers extend approximately to the mother bulbs after these have been separated from the daughter bulbs.

8. Separation device according to any of claims 1 or 3 to 6 intended preferably for separating the roots from flower bulbs, **characterized** in that the strength, stiffness, of the fingers (28) of the finger-equipped conveyor track, by selection of their length, thickness and/or material, is dimensions such that the fingers, when hitting a flower bulb largely evade the obstacle by bending away and buckling, and that the transport gap (27), which is limited by the free (outer) ends of the fingers, is dimensioned such that the fingers penetrate the imaginary plane-parallel space disk that surrounds the flower bulbs after their separation from the daughter bulbs preferably down to a depth of about one third to two thirds of the thickness of said space disk.

9. Separation device according to any of claims 7 and 8, **characterized** in that the separation device consists of two series-connected sub-separation-devices (10,20) the first of which is dimensioned for primarily separating daughter bulbs and the second for primarily separating roots.

10. Separation device according to claim 9, **characterized** in that the finger-equipped conveyor tracks of the first and the second sub-separation-device are arranged in the transport direction above one and the same cooperating conveyor track (15,25).

11. Separation device according to any of the preceding claims, **characterized** in that in front of and/or behind the upper finger-equipped conveyor track, seen in the direction of transport, a rotating cleaning brush, which contacts the flower bulbs, is arranged above the lower conveyor track.

12. Separation device according to any of the preceding claims, **characterized** in that the device is arranged in space such that the direction of transport is oblique or vertical.

13. Use of a separation device according to claim 2, **characterized** in that when finger-equipped transport areas are used on both conveyor tracks facing each other the fingers of one conveyor track engage with the fingers of the other conveyor track, negative transport gap.

## Revendications

1. Dispositif de séparation pour séparer des oignons-fils et/ou des racines d'oignons de fleurs, par exemple d'oignons de freesia, comportant un dispositif convoyeur ayant une voie (15, 25) de convoyage inférieure, disposée de préférence à l'horizontale et une voie (16, 26) de convoyage supérieure, qui est disposée au-dessus de la voie de convoyage inférieure, qui s'étend au moins sur une partie de la voie de convoyage inférieure et qui forme, conjointement avec la voie de convoyage inférieure, une zone (17, 27) d'interstice, sensiblement parallèle à un plan ou convergeant légèrement dans la direction de convoyage, dans laquelle les oignons (6) sont convoyés, la distance entre la voie de convoyage inférieure et la voie de convoyage supérieure étant telle que la voie de convoyage supérieure saisit les oignons, caractérisé en ce que la voie (16, 26) de convoyage supérieure est occupée par des doigts (18, 28) en matériau élastique, qui ont un effet de transport sur les oignons (6), et en ce que la voie (15, 25) de convoyage inférieure a une surface de convoyage plane.

2. Dispositif de séparation pour séparer les oignons-fils et/ou les racines d'oignons de fleurs, par exemple d'oignons de freesia, comportant un dispositif de convoyage ayant une voie (15, 25) de convoyage inférieure, disposée de préférence à l'horizontale, et une voie (16, 26) de convoyage supérieure, qui est montée au-dessus de la voie de convoyage inférieure, qui s'étend au moins sur une partie de la voie de convoyage inférieure et qui forme, conjointement avec la voie de convoyage inférieure, une zone (17, 27) d'interstice, sensiblement parallèle à un plan ou convergeant légèrement dans la direction de convoyage, dans laquelle les oignons (6) sont convoyés, la distance entre la voie de convoyage inférieure et la voie de convoyage supérieure étant telle que la voie de convoyage supérieure saisit les oignons, caractérisé en ce que la voie de convoyage inférieure est formée par une pluralité de galets (41) de convoyage tournants, qui sont montés côte a côte dans un plan, dont les axes de rotation s'étendent parallélement à la voie de convoyage supérieure et qui sont munis de doigts en un matériau élastique qui ont un effet de transport sur les oignons, tandis que la voie de convoyage supérieure est constituée d'une bande convoyeuse sans fin tournante, munie de doigts en un matériau élastique qui ont un effet de transport sur les oignons ou également d'une pluralité de galets (41) convoyeurs tournants, qui sont disposés côte à côte dans un plan et qui sont munis de doigts en un matériau élastique qui ont un effet de transport sur les oignons.

3. Dispositif de séparation suivant la revendication 1, caractérisé en ce que la voie (15, 25) de convoyage inférieure munie d'une surface de convoyage plane est formée par une bande (25) convoyeuse sans fin tournante.

4. Dispositif de séparation suivant la revendication 1, caractérisé en ce que la voie (15, 25) de convoyage inférieure est formée par un dispositif (10) convoyeur à secousses.

5. Dispositif de séparation suivant la revendication 3, caractérisé en ce que la bande (25) de convoyage inférieure est disposée sur un dispositif (10) convoyeur à secousses.

6. Dispositif de séparation suivant la revendication 1 ou 3 à 5, caractérisé en ce que la voie de convoyage supérieure, munie de doigts (18, 28), est formée par une pluralité de galets (41) convoyeurs tournants à doigts, qui sont disposés côte à côte dans un plan et dont les axes de rotation s'étendent parallélement à la voie (15, 25) de convoyage inférieure.

7. Dispositif de séparation suivant l'une des revendications 1 ou 3 à 6, pour l'utilisation préférée pour séparer des oignons-fils d'oignons-mère, caractérisé en ce que l'épaisseur, la rigidité, des doigts (18) de la voie de convoyage à doigts sont dimensionnées, par le choix de leur longueur, de leur épaisseur et/ou de leur matériau, de manière que les doigts, lorsqu'ils arrivent sur un oignon (8) fils ayant poussé sur l'oignon (7) mère, ne s'écartent pas notablement, mais séparent l'oignon-fils de l'oignon-mère, et en ce que l'interstice (17) de convoyage délimité par les extrémités libres des doigts est dimensionné de manière que les doigts arrivent à peu près jusqu'aux oignons-mère après que ceux-ci ont été débarrassés des oignons-fils.

8. Dispositif de séparation suivant l'une des revendications 1 ou 3 à 6, pour l'utilisation préférée pour séparer les racines d'oignons de fleurs, caractérisé en ce que l'épaisseur, la rigidité, des doigts (28) de la voie de convoyage à doigts sont dimensionnées, par le choix de leur longueur, de leur épaisseur et/ou de leur matériau de manière que, lorsqu'ils arrivent sur des oignons de fleurs, ils évitent dans une grande mesure la résistance en étant détournés et écartés, et en ce que l'interstice (27) de convoyage délimité par les extrémités libres des doigts est dimensionné de manière que les doigts rentrent dans le volume d'espace parallèle à un plan entourant les oignons de fleurs après qu'ils ont été séparés des oignons-fils, de préférence jusqu'à une profondeur d'environ un à deux tiers de l'épaisseur dudit volume spatial.

9. Dispositif de séparation suivant l'une des revendications 7 et 8, caractérisé en ce que le dispositif de séparation est constitué de deux dispositifs (10, 20) de séparation partiels montés en série, dont le premier est dimensionné pour la séparation préférée d'oignons-fils et dont le deuxième est dimensionné pour la séparation préférée de racines.

10. Dispositif de séparation suivant la revendication 9, caractérisé en ce que les voies de convoyage à doigts du premier et du deuxième dispositif de séparation partiels sont disposées l'une derrière l'autre dans le dispositif convoyeur, sur une seule et même voie (15, 25) de convoyage coopérante.

11. Dispositif de séparation suivant l'une des revendications précédentes, caractérisé en ce qu'il est monté dans le dispositif convoyeur, en amont et/ou en aval de la voie de convoyage à doigts supérieure, au-dessus de la voie de convoyage inférieure, une brosse (42) de nettoyage tournante qui touche les oignons de fleurs.

12. Dispositif de séparation suivant l'une des revendications précédentes, caractérisé en ce que le dispositif est monté dans l'espace de manière à avoir une direction de convoyage inclinée ou verticale.

13. Utilisation d'un dispositif de séparation suivant la revendication 2, caractérisée en ce que, lorsqu'on utilise des surfaces de convoyage ayant des doigts sur les deux voies de convoyage qui se font face, les doigts de l'une des voies de convoyage peignent les doigts de l'autre voie de convoyage, formant un interstice de convoyage négatif.
